# EUROPÄISCHE PATENTSCHRIFT

(11) **EP 4 511 645 B1**
(45) Veröffentlichungstag und Bekanntmachung des Hinweises auf die Patenterteilung: **28.10.2026**
(21) Anmeldenummer: 23723207.9
(22) Anmeldetag: 04.05.2023
(51) Int. Cl.: G01N 27/02, G05B 23/00

(54) **VERFAHREN ZUR ANALYSE EINER MATERIALZUSAMMENSETZUNG EINES TESTOBJEKTS UND AUTOMATISIERUNGSKOMPONENTE**
METHOD FOR ANALYZING A MATERIAL COMPOSITION OF A TEST OBJECT AND AUTOMATION COMPONENT
PROCÉDÉ D'ANALYSE D'UNE COMPOSITION DE MATIÈRE D'UN OBJET D'ESSAI ET COMPOSANTS D'AUTOMATISATION

(30) Priorität: 28.06.2022 EP 22181453
(43) Veröffentlichungstag der Anmeldung: 26.02.2025
(73) Patentinhaber: Siemens Aktiengesellschaft, 80333 München (DE)
(72) Erfinder: GRIESSBACH, Gunter, 09423 Gelenau (DE)
(74) Vertreter: Siemens Patent Attorneys
(86) Internationale Anmeldenummer: PCT/EP2023/061784
(87) Internationale Veröffentlichungsnummer: WO 2024/002560

(56) Entgegenhaltungen:
- EP-B1- 0 782 692
- WO-A1-2018/203055
- DE-A1- 102019 218 591
- US-A1- 2015 120 213

## Beschreibung

Die Erfindung betrifft ein Verfahren zur Analyse einer Materialzusammensetzung eines Testobjekts, bei welchem mit einer Impedanz-Messeinheit mit einem elektrischen Prüfsignal ein von einer Frequenz und/oder einer Amplitude des Prüfsignals abhängiges Impedanzspektrum über einen Sensor von dem Testobjekt aufgenommen wird.

Ebenso betrifft die Erfindung eine Automatisierungskomponente umfassend eine Impedanz-Messeinheit ausgestaltet mit einem elektrischen Prüfsignal ein von einer Frequenz und/oder einer Amplitude des Prüfsignals abhängiges Impedanzspektrum über einen Sensor von einem Testobjekt aufzunehmen.

Aus der Messung von Impedanzen eines Testobjektes bei unterschiedlichen Frequenzen lassen sich Eigenschaften des Testobjektes aufzeigen. Das Messverfahren ist unter den Namen Impedanz-Spektroskopie bekannt.

Für eine Impedanzmessung gibt es bereits geeignete Messgeräte. Diese erlauben die Impedanzmessung bei verschiedenen Frequenzen. Die daraus resultierenden komplexen Impedanzwerte können danach zu einem Verlauf über die Frequenz dargestellt werden, nämlich dem Impedanzspektrum. Üblich ist eine Ermittlung des Impedanzspektrums mithilfe spezieller Sensoren, die es erlauben, unterschiedliche Testobjekte oder Materialien zu untersuchen.

Die WO 2018/203055 A1 beschreibt eine Methode eine Leitfähigkeit eines Materials mit Hilfe der Impedanzspektroskopie zu ermitteln.

Die EP 0 782 692 B1 zeigt einen speziellen Betrieb einer Messspule mit mehreren Frequenzkomponenten gleichzeitig.

Im Gegensatz zu elektrischen Bauteilen, bei denen die Impedanzen hauptsächlich durch physikalische Zusammenhänge beschrieben werden und berechenbar sind, gibt es auch Impedanzverläufe die nicht ohne weiteres physikalischen Gesetzmäßigkeiten zuordenbar sind.

Es ist Aufgabe der vorliegenden Erfindung, insbesondere für die fertigungstechnische Automatisierungstechnik, ein Verfahren zur Analyse einer Materialzusammensetzung eines Testobjektes anzugeben, und zwar für Testobjekte bei welchen die Impedanzverläufe nicht durch physikalische Gesetzmäßigkeiten, beispielsweise durch Berechnung einer Formel, verifizierbar sind.

Die Aufgabe wird durch ein Verfahren zur Analyse einer Materialzusammensetzung eines Testobjektes dadurch gelöst, dass mit einer Impedanz-Messeinheit mit einem elektrischen Prüfsignal ein von einer Frequenz und/oder einer Amplitude des Prüfsignals abhängiges Impedanzspektrum über einen Sensor von dem Testobjekt aufgenommen wird, wobei in einer Zuordnungstabelle unterschiedliche Materialzusammensetzungen gespeichert werden, wobei jeweils ein Prüfling für jede Materialzusammensetzung bereitgestellt wird, wobei in einer Erfassungs-Phase für das Testobjekt der jeweilige Prüfling eingesetzt wird und mit der Impedanz-Messeinheit eine vorgebbare Anzahl von Testspektren von dem jeweiligen Prüfling aufgenommen werden und diese Anzahl an Testspektren als ein Materialzusammensetzung spezifischer Trainings-Datensatz in einer Probenerfassungseinheit hinterlegt wird, in einer anschließenden Lern-Phase wird für die Anzahl an Testspektren der jeweiligen Materialzusammensetzungen ein Materialzusammensetzung spezifisches neuronales Netz angelernt, in einer danach stattfindenden für den Fertigungsprozess entscheidenden Analyse-Phase wird ein aktuell aufgenommenes Impedanzspektrum des Testobjektes mit den Materialzusammensetzung spezifischen neuronalen Netzen analysiert und als Ergebnis der Analyse wird die Materialzusammensetzung ausgegeben, welches für das zu analysierende Impedanzspektrum die höchste Übereinstimmung zu den jeweiligen Materialzusammensetzungen spezifischen neuronalen Netz ergeben hat, wobei eine weitere Verbesserung in der Aussagekraft der Analyse wird dadurch erreicht, dass das Impedanzspektrum als komplexwertiger Verlauf der Frequenz angegeben wird, und für einen Betrag, einen Phasenwinkel, einen Realteil und einen Imaginärteil jeweils separate Materialzusammensetzung spezifische neuronale Netze angelernt werden, welche in der Analyse-Phase für den Vergleich mit dem aktuell aufgenommenen Impedanzspektrum parallel arbeiten um eine Genauigkeit der Aussage zu der zu ermittelnden Materialzusammensetzung zu erhöhen.

Im Sinne der Erfindung bilden neuronale Netze, also künstliche neuronale Netze, Neuronenstrukturen mit erlerntem Wissen ab. Aus dem Bereich der künstlichen Intelligenz gibt es ein Knowledge discovery in data base Verfahren, welches oft auch als data mining bezeichnet wird. Aus diesem Data Mining leitet sich der generelle Anspruch ab, unbekannte Zusammenhänge aus meist sehr großen Datenbeständen zu entdecken. Dabei werden die verwendeten Algorithmen verschieden betrieben, also ohne Vorgabe expliziter Ergebniserwartungen, die Datenbestände zu analysieren. Insbesondere Materialien bei der automatisierungstechnischen Fertigung unterliegen herstellungs- bzw. chargenbedingten Schwankungen.

Die Erfindung bietet den Vorteil, Testobjekte zu analysieren, bei denen der Zusammenhang zwischen Objekteigenschaften und Impedanzspektrum nicht durch physikalische Gesetzmäßigkeiten analytisch beschreibbar ist.

In einer Weiterbildung des Verfahrens wird in der Zuordnungstabelle eine Soll-Materialzusammensetzung des Testobjektes abgespeichert und für die weiteren Materialzusammensetzungen werden bekannte Abweichungen in der Zusammensetzung zu der Soll-Materialzusammensetzung gewählt, wobei anhand der in der Analyse-Phase ermittelten Materialzusammensetzungen mithilfe der Soll-Materialzusammensetzung eine aktuelle Abweichung der Materialzusammensetzung von der Soll-Materialzusammensetzung bestimmt wird.

Der Erfinder hat erkannt, dass im Unterschied zu bekannten Verfahren der Impedanzspektrokopie es nun möglich ist, in der Kombination mit einer auf KI-Verfahren basierten Auswerteeinrichtungen im Zusammenspiel mit einem Automatisierungsgerät in der Fertigungstechnik eine Materialanalyse bereitzustellen, insbesondere für Materialien, welche sich nicht durch physikalische oder chemische Formen beschreiben lassen. Daraus ergibt sich der Vorteil, dass in einem Anlernprozess bestimmte Impedanzverläufe konkreten Eigenschaften des Testobjektes zugeordnet werden können. Im laufenden Fertigungsprozess kann dann in einer Echtzeit eine Klassifizierung der Eigenschaften erfolgen. Durch diese Klassifizierung ist eine Kmo und/oder Überwachung der Qualitätsmerkmale des Testobjektes möglich.

Im Zusammenspiel mit einem Automatisierungsgerät besteht dann die Möglichkeit der Steuerung oder Regelung des Prozesses. Dazu sieht das erfindungsgemäße Verfahren in einer Weiterbildung zur Anwendung in einem Fertigungsprozess des Testobjektes vor, mit der Kenntnis der Abweichung der Materialzusammensetzung derart in den Fertigungsprozess eingreifen zu können, dass das Testobjekt wieder die Soll-Materialzusammensetzung aufweist.

Ein noch verbesserter Verfahrensschritt sieht vor, dass die Erfassungs-Phase auf einer lokalen Automatisierungskomponente durchgeführt wird, und die Materialzusammensetzung spezifischen Trainings-Datensätze an ein übergeordnetes Rechensystem gesendet werden, wobei die Lernphase auf dem übergeordneten Rechensystem durchgeführt wird, und die erlernten oder errechnete Materialzusammensetzung spezifischen neuronalen Netze von dem übergeordneten Rechensystem an die lokale Automatisierungskomponente zurückgesendet werden und für die Analyse-Phase in der Automatisierungskomponente abgespeichert werden.

Verfahrensgemäß kann dann ein Automatisierungsgerät modular aufgebaut sein und sogar als ein mobiler Aufbau ausgestaltet sein. Dieser mobile Aufbau könnte dann ausschließlich dem Anlernen der KI-Applikationen dienen. Die Datensätze könnten dann beispielsweise in einen Cloudservicedienst eingespeist werden und es würde als Ergebnis ein angelerntes neuronales Netz zurückgeliefert werden. Das angelernte neuronale Netz wird dann auf dem modularen Automatisierungsgerät gespeichert und kann dann in die im Prozess befindliche Anlage integriert werden. Ein Download des neuronalen Netzwerkes während des Betriebes der Anlage ist ebenfalls vorstellbar.

Bei der Auswertung des Impedanzspektrums in Form einer Klassifizierung durch neuronale Netzwerke können in diesen einzelnen Darstellungsformen, also Betrag, Phase, Realteil und Imaginärteil, auch in parallel arbeitenden, getrennten Netzwerken Materialzusammensetzungen berechnet werden. Die Eigenschaften der zu untersuchenden Substanz können sich unterschiedlich auf die einzelnen Darstellungsformen (Betrag, Phase, Realteil und Imaginärteil) auswirken und damit ist eine genauere Trefferquote bei der Klassifizierung in den neuronalen Netzen möglich.

Für eine Automatisierungskomponente umfassend eine Impedanzmesseinheit ausgestaltet mit einem elektrischen Prüfsignal ein von einer Frequenz und/oder einer Amplitude des Prüfsignals abhängiges Impedanzspektrum über einen Sensor von einem Testobjekt aufzunehmen, wobei ein Prozessorbaustein ausgestaltet ist, neuronale Netze zu verarbeiten, und ein Datenspeicher in dem ein neuronales Netz abgespeichert ist, wird die eingangs genannte Aufgabe dadurch gelöst, dass eine Zuordnungstabelle, in welcher unterschiedliche Materialzusammensetzungen gespeichert sind, eine Probenerfassungseinheit, welche ausgestaltet ist in einer Erfassungsphase mittels der Impedanzmesseinheit eine vorgebbare Anzahl von Testspektren für die in der Zuordnungstabelle angegebenen Materialzusammensetzungen aufzunehmen, vorhanden sind, weiterhin ist ein Datenmanager ausgestaltet die Anzahl an Testspektren als Materialzusammensetzung spezifischen Trainings-Datensätze in der Probenerfassungseinheit zu hinterlegen und zu verwalten, eine Schnittstelle ist ausgestaltet zu einem Lernmittel eine Verbindung aufzunehmen, wobei das Lernmittel ausgestaltet ist in einer Lernphase für die jeweiligen Trainings-Datensätze jeweils ein Materialzusammensetzung spezifisches neuronales Netz bereitzustellen, der Datenspeicher ist ausgestaltet, dass in ihm die spezifischen neuronalen Netze abgespeichert sind, wobei der Prozessorbaustein ausgestaltet ist es zu ermöglichen in einer Analyse-Phase das aktuell aufgenommene Impedanzspektrum mit den spezifischen neuronalen Netzen zu analysieren und als Ergebnis die Materialzusammensetzung auszugeben, welche für das zu analysierende Impedanzspektrum die höchste Übereinstimmung zu dem jeweiligen Materialzusammensetzung spezifischen neuronalen Netz ergeben hat, wobei das Impedanzspektrum als komplexwertiger Verlauf der Frequenz angegeben ist, und der Prozessorbausteins weiterhin ausgestaltet ist für einen Betrag, einen Phasenwinkel, einen Realteil und einen Imaginärteil jeweils separate Materialzusammensetzung spezifische neuronale Netze anzulernen, welche in der Analyse-Phase für den Vergleich mit dem aktuell aufgenommenen Impedanzspektrum parallel arbeiten um eine Genauigkeit der Aussage zu der zu ermittelnden Materialzusammensetzung zu erhöhen.

Die Automatisierungsomponente wird dadurch verbessert, dass in der Zuordnungstabelle eine Soll-Materialzusammensetzung des Testobjektes abgespeichert ist und die weiteren Materialzusammensetzungen mit bekannten Abweichungen in der Zusammensetzung zu der Soll-Materialzusammensetzung abgespeichert sind, wobei ein Berechnungsmittel vorhanden ist, wobei es ausgestaltet ist, anhand der in der Analyse-Phase ermittelten Materialzusammensetzung mithilfe der Soll-Materialzusammensetzung die Abweichung der Materialzusammensetzungen zu bestimmen.

Durch den Anlernprozess werden in der späteren Lernphase bestimmten Impedanzverläufen die konkreten Eigenschaften des Testobjektes zugeordnet. In einem laufenden Prozess kann dann in Echtzeit eine Klassifizierung der Eigenschaften erfolgen. Durch diese Klassifizierung ist eine Kontrolle/Überwachung der Qualitätsmerkmale des Testobjektes möglich. Im Zusammenspiel mit einem Automatisierungsgerät besteht weiterhin die Möglichkeit der Steuerung oder der Regelung des Fertigungsprozesses.

Dazu ist die Automatisierungskomponente zur Anwendung in einem Fertigungsprozess des Testobjektes mit einer Meldeeinheit ausgestaltet, welche wiederum ausgestaltet ist die Abweichung der Materialzusammensetzung einer Regel- und/oder Steuereinheit mitzuteilen, welche wiederum ausgestaltet ist in den Fertigungsprozess einzugreifen, so dass das zu fertigende Testobjekt wieder die Sollmaterialzusammensetzung aufweist.

Um die Trainings-Datensätze auszulagern oder beispielsweise in einem Cloudservice verarbeiten zu lassen ist die Automatisierungskomponente mit einer Datentransfereinheit ausgestaltet, welche ausgestaltet ist mit dem Datenmanager die Materialzusammensetzung spezifischen Trainings-Datensätze an ein übergeordnetes Rechensystem zu senden.

Durch einen modularen Aufbau eines Automatisierungsgerätes könnte man insbesondere mit der Automatisierungskomponente einen mobilen Aufbau realisieren. Der mobile Aufbau könnte dann ausschließlich mit dem Anlernen einer KI-Applikation betraut sein. Das angelernte neuronale Netz kann dann später auf die Automatisierungskomponente zurückgespeichert werden.

Die Zeichnung zeigt ein Ausführungsbeispiel der Erfindung, dabei zeigt die
- FIG 1: eine Automatisierungskomponente zur Analyse einer Materialzusammensetzung,
- FIG 2: den Verfahrensablauf in einer symbolischen Darstellung von unterschiedlichen Phasen und
- FIG 3: eine Verdeutlichung der Ermittlung von Testspektren durch zuvor besonders präparierte Prüflinge.

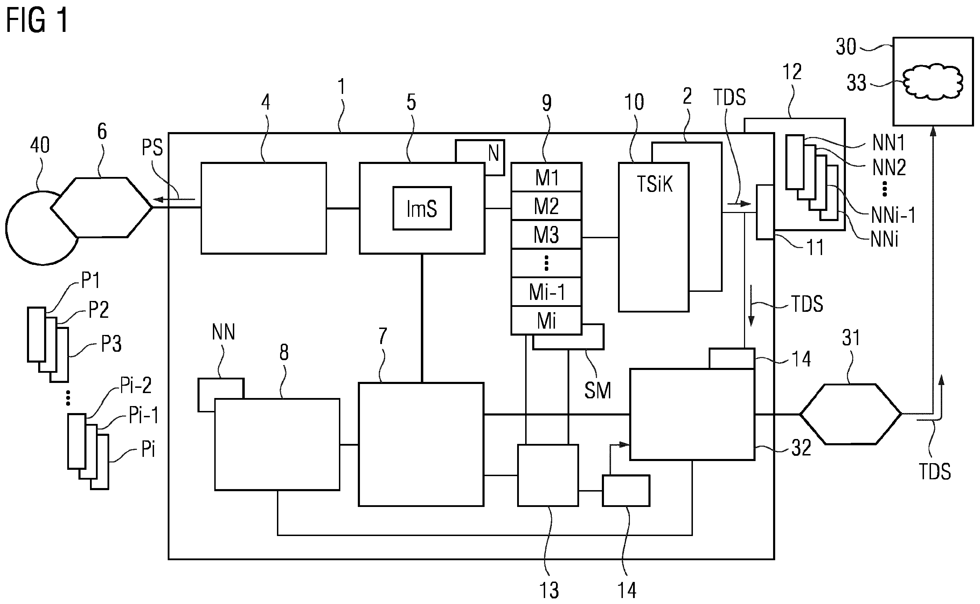

Die FIG 1 zeigt eine Automatisierungskomponente 1, welche ausgestaltet ist zur Analyse einer Materialzusammensetzung Mi eines Testobjekts 40. Das Testobjekt 40 wird über einen Sensor 6 mittels eines Prüfsignals PS analysiert. Eine Impedanzmesseinheit 5 ist dazu ausgestaltet, mit dem elektrischen Prüfsignal PS ein von einer Frequenz und/oder einer Amplitude des Prüfsignals PS abhängiges Impedanzspektrum ImS über den Sensor 6 von dem Testobjekt 40 aufzunehmen. Zwischen dem Sensor 6 und der Impedanzmesseinheit 5 ist ein sensorspezifisches Sensorinterface 4 angeordnet.

Zur Auswertung eines neuronalen Netzes NN weist die Automatisierungskomponente 1 einen Prozessorbaustein 7 auf. Der Prozessorbaustein 7 ist mit einem Datenspeicher 8 gekoppelt, in welchem das oder die neuronalen Netze NNi abgespeichert werden.

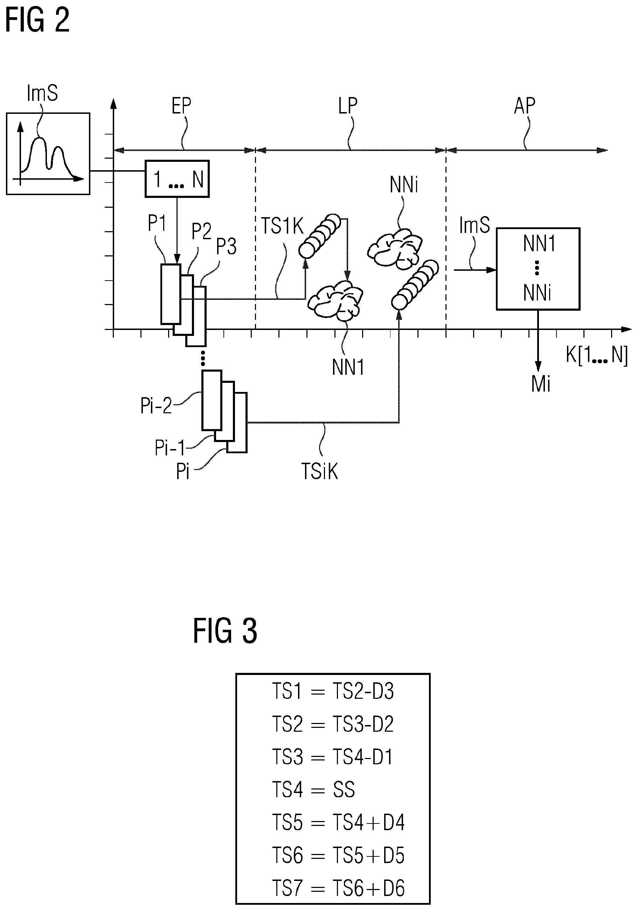

Für eine Erfassungs-Phase EP (siehe FIG 2) wird für das Testobjekt i,O jeweils ein Prüfling Pi eingesetzt und mit der Impedanz-Messeinheit 5 wird eine vorgebbare Anzahl N = 100 an Testspektren TSi1,...,100 von dem jeweiligen Prüfling Pi aufgenommen. Diese Anzahl N = 100 an Testspektren werden als ein Materialzusammensetzung Mi spezifischer Trainings-Datensatz TDs in einer Probenerfassungseinheit 10 hinterlegt.

Das bedeutet, in einer ersten Erfassung-Phase EP wird ein erster Prüfling P1, welcher einer ersten Materialzusammensetzung Mi entspricht, zur Messung von eben dieser Materialzusammensetzung entsprechenden Testspektren bereitgestellt. Demnach sind in der Zuordnungstabelle 9 so viele Materialzusammensetzungen Mi abgespeichert, wie es Prüflinge Pi gibt.

Für eine Lernphase LP werden die Testspektren TSi1,...,100 der jeweiligen Materialzusammensetzung Mi zur Bildung eines Materialzusammensetzung Mi spezifischen neuronalen Netzes NNi angelernt. Hierzu können die Trainingsdatensätze TDs entweder über eine Schnittstelle 11 zu einem Lernmittel 12 geführt werden oder über ein Businterface 32 an ein Bussystem 31 weitergegeben werden damit die Trainingsdatensätze TDs an ein übergeordnetes Rechensystem 30 weitergegeben werden können. In diesem übergeordneten Rechensystem 30 befindet sich ein Lernalgorythmus 33, in welchen die Trainingsdatensätze TDs in Materialzusammensetzung Mi spezifische neuronale Netze NNi angelernt werden.

In der Zuordnungstabelle 9 ist weiterhin eine Soll-Materialzusammensetzung SM des Testobjektes 40 abgespeichert. Für die weiteren Materialzusammensetzungen Mi ist eine bekannte Abweichung in der Zusammensetzung zu der Soll-Materialzusammensetzung SM ebenfalls abgespeichert. Es steht ein Berechnungsmittel 13 zur Verfügung, welches ausgestaltet ist, anhand der in der Analyse-Phase AP ermittelten Testspektren für die Materialzusammensetzung mithilfe der Soll-Materialzusammensetzung SM die Abweichung der Materialzusammensetzung SM zu bestimmen.

Weiterhin existiert in der Automatisierungskomponente eine Meldeeinheit 14, welche ausgestaltet ist, die Abweichung der Materialzusammensetzung einer Regel- und/oder Steuereinheit mitzuteilen, welche dann wiederum ausgestaltet ist, in den Fertigungsprozess einzugreifen, so dass das zu fertigende Testobjekt 40 wieder die Soll-Materialzusammensetzung aufweist.

Gemäß FIG 2 sind im Wesentlichen die Erfassungs-Phase EP, die Lern-Phase LP und die Analyse-Phase AP des Verfahrens zur Analyse einer Materialzusammensetzung Mi eines Testobjektes dargestellt. In der Erfassungs-Phase EP wird für das Testobjekt 40 jeweils ein Prüfling P1,P12,P3,...,Pi-2,Pi-1,Pi bereitgestellt. Mit der Impedanz-Messeinheit 5 werden für jeden Prüfling Pi eine Anzahl N an Impedanzspektren ImS aufgenommen. Die aufgenommenen Impedanzspektren ImS sind dann den Prüflingen Pi bzw. der Materialzusammensetzung Mi zugeordnet und ergeben die aufgenommenen Testspektren TSik von dem jeweiligen Prüfling Pi.

In einer Lernphase LP werden für die Anzahl N an Testspektren TSik der jeweiligen Materialzusammensetzung Mi ein Materialzusammensetzung Mi spezifisches neuronales Netz NNi angelernt. Demnach wird aus einem ersten Testspektrum TS1k für einen ersten Prüfling P1 ein erstes Materialzusammensetzung M1 spezifisches neuronales Netz NN1 gebildet und ebenso für einen i-ten Prüfling Pi für eine I-te Materialzusammensetzung Mi wird ein i-tes Testspektrum TSik zusammengefasst und es wird ein i-tes Materialzusammensetzung spezifisches neuronales Netz NNi angelernt bzw. erzeugt oder gebildet.

In der späteren Analyse-Phase AP wird wiederum ein aktuell aufgenommenes Impedanzspektrum ImS des Testobjektes 40 mit den Materialzusammensetzung MMi spezifischen neuronalen Netzen NNi analysiert und als Ergebnis wird die Materialzusammensetzung Mi ausgegeben, welche für das zu analysierende Impedanzspektrum ImS die höchste Übereinstimmung mit dem jeweiligen Materialzusammensetzung Mi spezifischen neuronalen Netz NNi ergeben hat.

Mit der FIG 3 wird noch einmal der Zusammenhang zwischen den bekannten Abweichungen der Prüflinge Pi in der Materialzusammensetzung zu der Zusammensetzung zu der Soll-Materialzusammensetzung SM dargestellt. Mit einem vierten Prüfling wird ein Testspektrum TS4 aufgenommen, welches dem Sollspektrum SS entspricht. Mit einem dritten Prüfling P3 wird dann ein drittes Testspektrum TS3 aufgenommen, welches der Materialzusammensetzung SM des vierten Prüflings P4 minus einer Abweichung D1 entspricht. Mit einem fünften Prüfling P5 wird ein Testspektrum TS aufgenommen, welches einer Materialabweichung des vierten Prüflings P4 plus einer Abweichung D4 entspricht usw..

## Patentansprüche

1. Verfahren zur Analyse einer Materialzusammensetzung eines Testobjekts (40), bei welchem
- mit einer Impedanz-Messeinheit (5) mit einem elektrischen Prüfsignal (PS) ein von einer Frequenz (f) und/oder einer Amplitude des Prüfsignals (PS) abhängiges Impedanzspektrum (ImS) über einen Sensor (6) von dem Testobjekt (40) aufgenommen wird,
- in einer Zuordnungstabelle (9) unterschiedliche Materialzusammensetzungen (Mi) gespeichert werden,
- jeweils ein Prüfling (Pi) für jede Materialzusammensetzung (Mi) bereitgestellt wird,
- in einer Erfassungs-Phase (EP) für das Testobjekt (40) der jeweilige Prüfling (Pi) eingesetzt wird und mit der Impedanz-Messeinheit (5) eine vorgebbare Anzahl (N) von Testspektren (TSik) von dem jeweiligen Prüfling (Pi) aufgenommen werden und diese Anzahl an Testspektren (TSik) als ein Materialzusammensetzung (Mi) spezifischer Trainings-Datensatz (TDS) in einer Probenerfassungseinheit (10) hinterlegt wird,
- in einer Lernphase (LP) für die Anzahl (N) an Testspektren (TSik) der jeweiligen Materialzusammensetzungen (Mi) ein spezifisches neuronales Netz (NNi) angelernt wird,
- in einer Analyse-Phase (AP) ein aktuell aufgenommenes Impedanzspektrum (ImS) des Testobjektes (40) mit den Materialzusammensetzung (Mi) spezifischen neuronalen Netzen (NNi) analysiert wird und als Ergebnis die Materialzusammensetzung (Mi) ausgegeben wird, welche für das zu analysierende Impedanzspektrum (ImS) die höchste Übereinstimmung zu dem jeweiligen Materialzusammensetzungen (Mi) spezifischen neuronalen Netz (NNi) ergeben hat,
**dadurch gekennzeichnet, dass** das Impedanzspektrum (ImS) als komplexwertiger Verlauf der Frequenz angegeben wird, und für einen Betrag, einen Phasenwinkel, einen Realteil und einen Imaginärteil jeweils separate Materialzusammensetzung (Mi) spezifische neuronale Netze (NNi) angelernt werden, welche in der Analyse-Phase (AP) für den Vergleich mit dem aktuell aufgenommenen Impedanzspektrum (ImS) parallel arbeiten um eine Genauigkeit der Aussage zu der zu ermittelnden Materialzusammensetzung zu erhöhen.

2. Verfahren nach Anspruch 1, wobei in der Zuordnungstabelle (9) eine Soll-Materialzusammensetzung (SM) des Testobjektes (40) abgespeichert wird und für die weiteren Materialzusammensetzungen (Mi) bekannte Abweichungen in der Zusammensetzung zu der Soll-Materialzusammensetzung (SM) gewählt werden, wobei anhand in der Analyse-Phase (AP) ermittelten Materialzusammensetzung (Mi) mit Hilfe der Soll-Materialzusammensetzung (SM) eine aktuelle Abweichung der Materialzusammensetzung bestimmt wird.

3. Verfahren nach Anspruch 1 oder 2, zur Anwendung in einem Fertigungsprozess des Testobjektes (40), wobei mit der Kenntnis der Abweichung der Materialzusammensetzung (Mi) derart in den Fertigungsprozess eingegriffen wird, dass das zu fertigende Testobjekt (40) wieder die Soll-Materialzusammensetzung (SM) aufweist.

4. Verfahren nach einem der Ansprüche 1 bis 3, bei welchem die Erfassungs-Phase (EP) auf einer lokalen Automatisierungskomponente (1) durchgeführt wird, und die Materialzusammensetzung (Mi) spezifischen Trainings-Datensätze an ein übergeordnetes Rechensystem (30) gesendet werden, wobei die Lernphase (LP) auf dem übergeordneten Rechensystem (30) durchgeführt wird, und die erlernten oder errechneten Materialzusammensetzung (Mi) spezifischen neuronalen Netze (NNi) von dem übergeordneten Rechensystem (30) an die lokale Automatisierungskomponente (1) zurückgesendet wird und für die Analyse-Phase (AP) abgespeichert wird.

5. Automatisierungskomponente (1) umfassend
- eine Impedanzmesseinheit (5) ausgestaltet mit einem elektrischen Prüfsignal (PS) ein von einer Frequenz und/oder einer Amplitude des Prüfsignals (PS) abhängiges Impedanzspektrum (ImS) über einen Sensor (6) von einem Testobjekt (40) aufzunehmen,
- einen Prozessorbaustein (7) ausgestaltet neuronale Netze (NN) zu verarbeiten,
- einen Datenspeicher (8) in dem ein neuronales Netz (NN) abgespeichert ist,
**gekennzeichnet durch**,
- eine Zuordnungstabelle (9), in welcher unterschiedliche Materialzusammensetzungen (Mi) gespeichert sind,
- eine Probenerfassungseinheit (10), welche ausgestaltet ist in einer Erfassungs-Phase (EP)) mittels der Impedanzmesseinheit (5) eine vorgebbare Anzahl (N) von Testspektren (TSik) für die in der Zuordnungstabelle (9) angegebenen Materialzusammensetzungen (Mi) aufzunehmen,
- einen Datenmanager (2) ausgestaltet die Anzahl an Testspektren (TSik) als Materialzusammensetzung (Mi) spezifische Trainings-Datensätze (TDS) in der Probenerfassungseinheit (10) zu hinterlegen und zu verwalten,
- eine Schnittstelle (11) zu einem Lernmittel (12), welches ausgestaltet ist in einer Lernphase (LP) für die jeweiligen Trainings-Datensätze (TDS) jeweils eine Materialzusammensetzung (Mi) spezifisches neuronales Netz (NNi) bereitzustellen,
- den Datenspeicher (8), in dem die spezifischen neuronalen Netze (NNi) gespeichert sind,
- eine Ausgestaltung des Prozessorbausteins (7), welche es ermöglicht in einer Analyse-Phase (AP) das aktuell aufgenommene Impedanzspektrum (ImS) mit den spezifischen neuronalen Netzen (NNKᵢ) zu analysieren und als Ergebnis die Materialzusammensetzung (Mi) auszugeben, welche für das zu analysierende Impedanzspektrum (ImS) die höchste Übereinstimmung zu dem jeweiligen Materialzusammensetzung (Mi) spezifischen neuronalen Netz (NNi) ergeben hat, wobei das Impedanzspektrum (ImS) als komplexwertiger Verlauf der Frequenz angegeben ist, und der Prozessorbausteins (7) weiterhin ausgestaltet ist für einen Betrag, einen Phasenwinkel, einen Realteil und einen Imaginärteil jeweils separate Materialzusammensetzung (Mi) spezifische neuronale Netze (NNi) anzulernen, welche in der Analyse-Phase (AP) für den Vergleich mit dem aktuell aufgenommenen Impedanzspektrum (ImS) parallel arbeiten um eine Genauigkeit der Aussage zu der zu ermittelnden Materialzusammensetzung zu erhöhen.

6. Automatisierungskomponente (1) nach Anspruch 5, wobei in der Zuordnungstabelle (9) eine Soll-Materialzusammensetzung (SM) des Testobjektes (40) abgespeichert ist und die weiteren Materialzusammensetzungen (Mi) mit bekannten Abweichungen in der Zusammensetzung zu der Soll-Materialzusammensetzung (SM) abgespeichert sind, wobei ein Berechnungsmittel (13) vorhanden ist, welches ausgestaltet ist anhand in der Analyse-Phase (AP) ermittelten Materialzusammensetzung (Mi) mit Hilfe der Soll-Materialzusammensetzung (SM) die Abweichung der Materialzusammensetzung zu bestimmen.

7. Automatisierungskomponente (1) nach Anspruch 6, ausgestaltet zur Anwendung in einem Fertigungsprozess des Testobjektes (40) umfassend eine Meldeeinheit (14), welche ausgestaltet ist die Abweichung der Materialzusammensetzung einer Regel- und/oder Steuereinheit mitzuteilen, welche wiederum ausgestaltet ist in den Fertigungsprozess einzugreifen, so dass das zu fertigende Testobjekt (40) wieder die Soll-Materialzusammensetzung (SM) aufweist.

8. Automatisierungskomponente (1) nach einem der Ansprüche 5 bis 7, aufweisend eine Datentransfereinheit (14), welche ausgestaltet ist mit dem Datenmanager (2) die Materialzusammensetzung (Mi) spezifischen Trainings-Datensätze (TDS) an ein übergeordnetes Rechensystem (30) zu senden.

## Claims

1. Method for analysing the material composition of a test object (40), in which
- an impedance measuring unit (5) uses an electric test signal (PS) to acquire an impedance spectrum (ImS) dependent on a frequency (f) and/or an amplitude of the test signal (PS) from the test object (40) via a sensor (6),
- different material compositions (Mi) are stored in an allocation table (9),
- in each case a test sample (Pi) is provided for each material composition (Mi),
- the respective test sample (Pi) is employed for the test object (40) in a detection phase (EP), and a specifiable number (N) of test spectra (TSik) are acquired from the respective test sample (Pi) by means of the impedance measuring unit (5) and said number of test spectra (TSik) are stored in a sample detection unit (10) as a training data set (TDS) specific for the material composition (Mi),
- a specific neural network (NNi) is trained for the number (N) of test spectra (TSik) of the respective material compositions (Mi) in a learning phase (LP),
- a currently acquired impedance spectrum (ImS) of the test object (40) is analysed using the neural networks specific for the material composition (Mi) in an analysis phase (AP), and the material composition (Mi) which has proved to best match the respective neural network (NNi) specific for the material composition (Mi) for the impedance spectrum (ImS) to be analysed is output as the result,
**characterised in that**
the impedance spectrum (ImS) is specified as a complex-valued frequency curve, and separate neural networks (NNi) specific for the material composition (Mi) are trained for an absolute value, a phase angle, a real part and an imaginary part in each case, which work in parallel in the analysis phase (AP) for the comparison with the currently acquired impedance spectrum (ImS) in order to increase the accuracy of the statement about the material composition to be determined.

2. Method according to claim 1, wherein a target material composition (SM) of the test object (40) is stored in the allocation table (9) and known deviations in composition from the target material composition (SM) are selected for the further material compositions (Mi), wherein a current deviation of the material composition is ascertained with the help of the target material composition (SM) on the basis of the material composition (Mi) determined in the analysis phase (AP).

3. Method according to claim 1 or 2, for use in a manufacturing process of the test object (40), wherein the knowledge of the deviation of the material composition (Mi) is used to intervene in the manufacturing process so that the test object (40) to be manufactured again has the target material composition (SM).

4. Method according to one of claims 1 to 3, in which the detection phase (EP) is performed on a local automation component (1), and the training data sets specific for the material composition (Mi) are sent to a higher-level computing system (30), wherein the learning phase (LP) is performed on the higher-level computing system (30), and the learned or calculated neural networks (NNi) specific for the material composition (Mi) are sent back from the higher-level computing system (30) to the local automation component (1) and are stored for the analysis phase (AP).

5. Automation component (1) comprising
- an impedance measuring unit (5) designed to use an electric test signal (PS) to acquire an impedance spectrum (ImS) dependent on a frequency and/or an amplitude of the test signal (PS) from a test object (40) via a sensor (6),
- a processor module (7) designed to process neural networks (NN),
- a data memory (8) in which a neural network (NN) is stored, **characterised by**
- an allocation table (9), in which different material compositions (Mi) are stored,
- a sample detection unit (10), which is designed to acquire a specifiable number (N) of test spectra (TSik) for the material compositions (Mi) specified in the allocation table (9) in a detection phase (EP)) by means of the impedance measuring unit (5),
- a data manager (2) designed to store and manage the number of test spectra (TSik) as training data sets (TDS) specific for the material composition (Mi) in the sample detection unit (10),
- an interface (11) to a learning tool (12), which is designed in each case to provide a neural network (NNi) specific for the material composition (Mi) in a learning phase (LP) for the respective training data sets (TDS),
- the data memory (8), in which the specific neural networks (NNi) are stored,
- an embodiment of the processor module (7), which enables the currently acquired impedance spectrum (ImS) to be analysed with the specific neural networks (NNKᵢ) in an analysis phase (AP) and as a result the material composition (Mi) to be output which for the impedance spectrum (ImS) to be analysed has proved to best match the respective neural network (NNi) specific for the material composition (Mi), wherein the impedance spectrum (ImS) is specified as a complex-valued frequency curve, and the processor module (7) is furthermore designed to train separate neural networks (NNi) specific for the material composition (Mi) for an absolute value, a phase angle, a real part and an imaginary part in each case, which work in parallel in the analysis phase (AP) for the comparison with the currently acquired impedance spectrum (ImS) in order to increase the accuracy of the statement about the material composition to be determined.

6. Automation component (1) according to claim 5, wherein a target material composition (SM) of the test object (40) is stored in the allocation table (9) and the further material compositions (Mi) with known deviations in composition from the target material composition (SM) are stored, wherein a calculation means (13) is provided which is designed to ascertain the deviation of the material composition on the basis of the material composition (Mi) determined in the analysis phase (AP) with the help of the target material composition (SM).

7. Automation component (1) according to claim 6, designed for use in a manufacturing process of the test object (40) comprising a reporting unit (11) which is designed to notify the deviation of the material composition to a regulation and/or control unit, which in turn is designed to intervene in the manufacturing process so that the test object (40) to be manufactured again has the target material composition (SM).

8. Automation component (1) according to one of claims 5 to 7, having a data transfer unit (14) which is designed to use the data manager (2) to send the training data sets (TDS) specific for the material composition (Mi) to a higher-level computing system (30).

## Revendications

1. Procédé d'analyse d'une composition de matière d'un objet (40) d'essai, dans lequel,
- par un capteur (6) de l'objet (40) d'essai, on enregistre, par une unité (5) de mesure d'impédance par un signal (PS) électrique de contrôle, un spectre (ImS) d'impédance, qui dépend d'une fréquence (f) et/ou d'une amplitude du signal (PS) de contrôle,
- dans une table (9) d'association, on met en mémoire des compositions (Mi) différentes de matière,
- on prépare respectivement un échantillon (Pi) pour chaque composition (Mi) de matière,
- dans une phase (EP) de détection d'un objet (40) d'essai, on utilise l'échantillon (Pi) respectif et, par l'unité (5) de mesure d'impédance, on enregistre un nombre (N) pouvant être donné à l'avance de spectres (TSik) d'essai de l'échantillon (Pi) respectif et on met ce nombre de spectres (TSik) d'essai, comme ensemble (TDS) de données d'apprentissage spécifiques à une composition (Mi) de matière, en mémoire dans une unité (10) de traitement d'échantillon,
- dans une phase (LP) d'enseignement, on enseigne, pour le nombre (N) de spectres (TSik) d'essai des compositions (Mi) de matière respectives, un réseau (NNi) neuronal spécifique,
- dans une phase (AP) d'analyse, on analyse un spectre (ImS) d'impédance enregistré en cours de l'objet (40) de test par des réseaux (NNi) neuronaux spécifiques à la composition (Mi) de matière et on donne comme résultat la composition (Mi) de matière, qui, pour le spectre (ImS) d'impédance à analyser, a donné la coïncidence la plus grande avec le réseau (NNi) neuronal spécifique aux compositions (Mi) de matière respectives,
**caractérisé en ce que**
l'on donne le spectre (ImS) d'impédance comme courbe à valeurs complexes de la fréquence et, pour une valeur absolue, on enseigne un angle de phase, une partie réelle et une partie imaginaire à des réseaux (NNi) neuronaux spécifiques respectivement à une composition (Mi) de matière distincte qui, dans la phase (AP) d'analyse, travaillent en parallèle pour la comparaison au spectre (ImS) d'impédance enregistré en cours, afin d'augmenter la précision sur la composition de matière déterminée.

2. Procédé suivant la revendication 1, dans lequel, dans la table (9) d'association, on archive une composition (SM) de matière de consigne de l'objet (40) de test et, pour les autres compositions (Mi) de matière, on choisit des écarts connus dans la composition à la composition (SM) de matière, dans lequel, à l'aide de la composition (Mi) de matière déterminée dans la phase (AP) d'analyse, on détermine, à l'aide de la composition (SM) de matière de consigne, un écart en cours de la composition de matière.

3. Procédé suivant la revendication 1 ou 2 à utiliser dans une opération de fabrication de l'objet (40) de test, dans lequel, avec la connaissance de l'écart de la composition (Mi) de matière, on intervient dans l'opération de fabrication de manière à ce que l'objet (40) d'essai à fabriquer ait à nouveau la composition (SM) de matière de consigne.

4. Procédé suivant l'une des revendications 1 à 3, dans lequel on effectue la phase (EP) de détection sur un composant (1) local d'automatisation, et on envoie les jeux de données d'apprentissage spécifiques à la composition (Mi) de matière à un système (30) informatique supérieur hiérarchiquement, dans lequel on effectue la phase (LP) d'enseignement sur le système (30) informatique supérieur hiérarchiquement, et on retourne la composition (Mi) de matière, apprise ou calculée de réseaux (NNi) neuronaux spécifiques du système (30) informatique supérieur hiérarchiquement, au composant (1) local d'automatisation et on la met en mémoire pour la phase (AP) d'analyse.

5. Composant (1) d'automatisation comprenant
- une unité (5) de mesure d'impédance, conformée pour, par un capteur (6) d'un objet (40) d'essai, enregistrer, par un signal (PS) électrique de contrôle, un spectre (ImS) d'impédance, qui dépend d'une fréquence et/ou d'une amplitude du signal (PS) de contrôle,
- un module (7) de processeur constitué pour traiter des réseaux (NN) neuronaux,
- une mémoire (8) de données, dans laquelle un réseau (NN) neuronal est mis en mémoire,
**caractérisé par**
- une table (9) d'association, qui met en mémoire des compositions (Mi) de matière différentes,
- une unité (10) de détection d'échantillon, qui est conformée pour, dans une phase (EP) de détection au moyen de l'unité (5) de mesure d'impédance, enregistrer un nombre (N) pouvant être donné à l'avance de spectres (TSik) d'essai pour les compositions (Mi) de matière indiquées dans la table (9) d'association,
- un gestionnaire (2) de données conformé pour mettre en mémoire et gérer, dans l'unité (10) de détection d'échantillon, le nombre de spectres (TSik) d'essai comme ensemble (TDS) de données d'apprentissage spécifique à la composition (Mi) de matière,
- une interface (11) avec un moyen (12) d'enseignement, lequel est conformé pour, dans une phase (LP) d'enseignement, préparer, pour les ensembles (TDS) de données d'apprentissage respectifs, respectivement un réseau (NNi) neuronal spécifique à une composition (Mi) de matière,
- la mémoire (8) de données, dans laquelle les réseaux (NNi) neuronaux spécifiques sont mis en mémoire,
- une conformation du module (7) de processeur, qui permet, dans une phase (AP) d'analyse du spectre (ImS) d'impédance enregistrée en cours, d'analyser par les réseaux (NNKᵢ) neuronaux spécifiques et de donner comme résultat la composition (Mi) de matière qui, pour le spectre (ImS) d'impédance à analyser, a donné la coïncidence la plus grande avec le réseau (NNi) neuronal spécifique à la composition (Mi) de matière respective, dans lequel le spectre (ImS) d'impédance est donné comme courbe à valeurs complexes de la fréquence, et le module (7) de processeur est conformé en outre pour apprendre, pour une valeur absolue, un angle de phase, une partie réelle et une partie imaginaire respectivement de réseaux (NNi) neuronaux spécifiques à une composition (Mi) de matière distincte respectivement qui, dans la phase (AP) d'analyse, travaillant en parallèle pour la comparaison au spectre (ImS) d'impédance enregistré en cours, afin d'augmenter la précision de la prévision de la composition de matière à déterminer.

6. Composant (1) d'automatisation suivant la revendication 5, dans lequel, dans la table (9) d'association, est mise en mémoire une composition (SM) de matière de consigne de l'objet (40) de test et les autres compositions (Mi) de matière, ayant des écarts connus à la composition (SM) de matière de consigne, sont mises en mémoire, dans lequel il y a un moyen (13) de calcul, qui est conformé pour, à l'aide de la composition (Mi) de la matière déterminée dans la phase (AP) d'analyse, déterminer, à l'aide de la composition (SM) de matière de consigne, l'écart de la composition de matière.

7. Composant (1) d'automatisation suivant la revendication 6, conformée pour l'application dans une opération de fabrication de l'objet (40) de test comprenant une unité (14) d'annonce, qui est conformée pour faire part de l'écart de la composition de matière à une unité de régulation et/ou de commande, qui, de son côté, est conformée pour intervenir dans l'opération de fabrication, de manière à ce que l'objet (40) d'essai à fabriquer ait de nouveau la composition (SM) de matière de consigne.

8. Composant (1) d'automatisation suivant l'une des revendications 5 à 7, comportant une unité (14) de transfert de données, qui est conformée pour, par le gestionnaire (2) de données, envoyer à un système (30) informatique supérieur hiérarchiquement les ensembles (TDS) de données d'apprentissage spécifiques à la composition (Mi) de matière.
